(19) 

Europäisches
Patentamt

European
Patent Office

Office européen
des brevets

(11) **EP 1 609 973 B1**

(12) **EUROPEAN PATENT SPECIFICATION**

(45) Date of publication and mention
of the grant of the patent:
**28.02.2007 Bulletin 2007/09**

(51) Int Cl.:
*F02D 41/22* (2006.01)    *F02P 5/15* (2006.01)
*F02P 5/145* (2006.01)

(21) Application number: **04014767.0**

(22) Date of filing: **24.06.2004**

(54) **Method and arrangement for estimation of spark timing in an internal combustion engine**

Zündzeitsteuerungsverfahren und -einrichtung für Brennkraftmaschine

Système et dispositif de commande du point d'allumage d'un moteur à combustion interne

(84) Designated Contracting States:
**DE GB SE**

(43) Date of publication of application:
**28.12.2005 Bulletin 2005/52**

(73) Proprietor: **Ford Global Technologies, LLC**
**Dearborn, MI 48126 (US)**

(72) Inventors:
• **Möller, Peter**
**43168 Mölndal (SE)**
• **Svenske, Erik**
**41272 Göteborg (SE)**

(74) Representative: **Ekström, Nils**
**Albihns Göteborg AB**
**P.O. Box 142**
**401 22 Göteborg (SE)**

(56) References cited:
**EP-A- 0 309 103          EP-A- 1 201 921**
**US-A- 4 547 852**

• **PATENT ABSTRACTS OF JAPAN vol. 0092, no. 61 (M-422), 18 October 1985 (1985-10-18) & JP 60 108562 A (NIPPON DENSO KK), 14 June 1985 (1985-06-14)**

**Description**

TECHNICAL FIELD

The invention relates to a method for estimation of spark timing in an internal combustion engine of Otto type according to the preamble of claim 1. The invention furthermore relates to an internal combustion engine of Otto type comprising an arrangement for estimation of spark timing according to the preamble of claim 8.

BACKGROUND ART

In a modern combustion engine of Otto type, ignition timing is varied depending of the operation condition of the engine. One reason for shifting ignition timing is that shifting of ignition timing constitutes a manner of controlling output engine torque that has a shorter response time in comparison with methods where output engine torque is controlled by the amount of intake air supplied to the cylinders. For this reason, shifting of ignition timing is frequently used for controlling engine speed at idle. At idle, ignition timing is normally set at a spark advance angle $\Delta\alpha$ where the output torque is smaller than the output torque when the ignition timing is set for optimising the output torque. By not using the optimum ignition timing it is possible to regulate the engine speed both in the direction toward increased engine speed and in the direction toward decreased engine speed by changing the ignition timing.

Furthermore, shifting of ignition timing can also be used for delaying the heat release of the combustions in the cylinders so as to increase the thermal flow toward catalytic equipment arranged in the exhaust conduits. Thus adaptation of ignition timing can be used to significantly reduce the time lag before the catalytic device reaches light off temperature.

Ignition timing is performed in state of the art engines by determining a desired engine torque. The determined desired engine torque may be the torque required to maintain idle speed. Furthermore, other parameters used to control the engine such as for example existence of a cold start condition may also be used to determine a desired engine torque. A requested spark advance value $\Delta\alpha_{req}$ is based on said desired engine torque using a first mapping M1 describing the relation between desired engine torque and requested spark advance value $\Delta\alpha_{req}$.

A problem with prior art control system for spark advance is that spark advance is not monitored. In prior art control systems a spark advance angle is calculated. A control signal is generated based on the calculated spark advance angle. The control signal should effectuate the ignition at the calculated spark angle. Prior art control systems do however not provide any means for verifying that the ignition actually takes place at the calculated spark advance angle. Prior art, such as for instance US 5701865, suggest to adapt the spark advance angle to varying engine operating conditions by measuring the crankshaft rotational acceleration. Even though the spark advance angle is continuously adapted, the system is not aware of if the ignition takes place at the intended ignition timing.

Examples of prior art spark advance control systems are JP 60108562 and EP 1201921. EP 1201921, which is considered to be the closes prior art upon which the pre-characterising portion of claims 1 and 8 are based, relates to a system where the spark advance adjusted by the inclusion of two correction terms, wherein a first correction term is based according to the speed of rotation of the engine and the mass proportion of burnt gas trapped in the cylinder and a second correction term based on the ration between the generated torque and the maximum engine torque available. However, the second correction term makes use of a well known representation, frequently referred to as the single curve, of the relationship between spark advance and output torque. The suggested method only relates to determination of a desired spark advance value, which desired value is adapted to take into consideration of the effect that spark advance has on delivered torque in relation to torque delivered at zero spark advance. The system does therefore not monitor that the ignition takes place at the intended ignition timing, neither does the system suggest to measure the actual torque generated in the combustion.

This may lead to difficulties in maintaining constant idle speed and/or difficulties in maintaining low hydrocarbon, NOx and CO emissions at cold start conditions.

DISCLOSURE OF INVENTION

The object of the invention is to provide a method to control a combustion engine which reduces the difficulties of maintaining constant idle speed and/or reduces the difficulties of maintaining low hydrocarbon, NOx and CO emissions at cold start conditions.

The outset objects are achieved by a method according to the characterising portion of claim 1 and by a combustion engine according to the characterising portion of claim 8.

The method according to the invention suggest to monitor the actual spark advance angle. By the actual spark advance value is meant, the difference between the angle at which ignition actually take place and an ignition timing set for a maximal output torque. Ignition timings set for maximal output torque are stored in a map and is dependent on parameters such as engine speed and load. The actual spark advance value is thus not necessarily the same as the calculated requested spark advance value. The requested spark advance value is determined according to conventional methods known to a person skilled in the art from a desired output engine torque using a first mapping describing the relation between requested engine torque and spark advance value.

The actual spark advance value $\Delta\alpha_{act}$ is determined based on knowledge of delivered engine torque which is determined by a sensor. A second mapping M2 which describes the relation between actual engine torque and spark advance is used to determine the actual spark advance value. When the actual spark advance value has been determined the actual spark advance value is compared with the requested spark advance value and a fault signal is generated if the difference between the actual spark advance value and the requested spark advance value is larger than a threshold value.

By using a second mapping to determine the actual spark advance value from a determined output engine torque it is possible to determine if the control functions for setting the spark advance angle operates as intended.

It is therefore possible to reduce the risk for that the combustion engine runs with a malfunction of ignition timing.

In a preferred embodiment of the invention, the delivered engine torque $T_I$ is determined from an estimation of crankshaft rotational acceleration based on a signal from a crankshaft rotational speed sensor.

Furthermore, in a preferred embodiment, the relation between actual engine torque and spark advance is based on the relation $\eta_a(\Delta\alpha) = \dfrac{T_I}{T_{opt}(n_E, M_C)\eta_\lambda(\lambda)}$, where $\eta_\alpha$ is the efficiency depending on deviation from optimum ignition angle, $T_{opt}$ is indicated torque for stoichimetric combustion and optimum ignition angle, $n_E$ is the crankshaft rotational speed, $M_C$ is indicated air mass per combustion, $\eta_\lambda$ is the efficiency depending on deviation from a stoichiometric air/fuel ratio $\lambda$.

BRIEF DESCRIPTION OF DRAWINGS

The invention will be described in more detail below, with references to appended drawings, where

Fig. 1    is a schematic drawing of an internal combustion engine, which is arranged to determine the ignition timing using a method according to the invention,

Fig. 2    show a schematic flowchart of a method according to the invention,

Fig.3    is a graph over crankshaft speed measurements used in a method for determining torque, and

Fig. 4    show a schematic flowchart of a method for determining the delivered engine torque according to a preferred embodiment of the invention.

MODE(S) FOR CARRYING OUT THE INVENTION

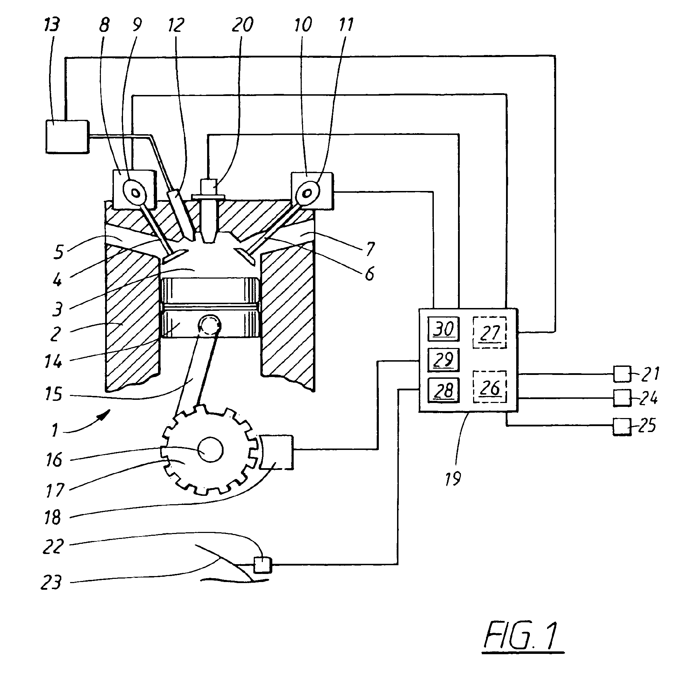

In figure 1 a schematic drawing of an internal combustion engine 1 is shown. The engine 1 includes an engine block 2 and combustion chambers in the form of cylinders 3 arranged therein. The gas flow through the cylinder 3 is controlled by at least one intake valve 4 arranged in connection to an intake conduit 5 and an exhaust valve 6 arranged in connection with an exhaust conduit 7. Opening and closing of the intake valve 4 is controlled by an actuator 8, which may be in the form of a camshaft 9. The camshaft may be arranged for supporting variable valve timing in a manner which is conventional in the art. Opening and closing of the exhaust valve 6 is controlled by an actuator 10, which may be in the form of a camshaft 11. The camshaft may be arranged for supporting variable valve timing in a manner which is conventional in the art. Fuel may be injected directly in the cylinder by an injector 12, or alternatively an injector will be arranged in connection with the intake port. The injector 12 is connected to a fuel injector assembly 13, which contains the necessary equipment for injecting fuel in a conventional manner. A piston 14 is reciprocatingly arranged in the cylinder 3. The piston 14 is connected to a piston rod 15 connected to a crank shaft 16 for converting the oscillating motion of the piston 14 to a rotational movement of the crank shaft 16. For controlling the position of the engine 1 a teethed wheel 17 is connected to the crank shaft 16. Teethed wheels may also be connected to either of the cam shafts for control of which part in the engine cycle the crank shaft currently is. A sensor 18 generates a pulse train as the teeth of the wheel 17 passes. An engine control unit 19 keeps control of the crank shaft position and generates control signals to a spark plug 20. The engine control unit furthermore controls the fuel injector assembly 13 for managing fuel injection timing and the amount of fuel injected. In order to regulate the fuel injection and ignition timing, the control unit communicates with a set of sensors including an air flow mass sensor 21 arranged in the intake conduit, means 22 for sensing the requested torque arranged in connection with an accelerator pedal 23, a lambda sensor 24 arranged in the exhaust channel and a temperature sensor 25 arranged for sensing the temperature of the engine coolant. The engine control unit 19 may be connected to a further number of sensors according to what is conventional in the art. The engine control unit 19, together with the means 22 for sensing the requested torque constitutes means for determining a desired engine torque.

The engine control unit furthermore comprises means 26 for determining a requested spark advance value. The requested spark advance value is calculated according to conventional practise and is based on said desired engine torque using a first mapping describing the relation between desired engine torque and spark advance. Furthermore the calculation may be based on whether a cold start condition exist or not. The judgement of whether a cold start condition exists or not is performed by the engine control unit which comprises means for determining if a cold start condition exist or not. By cold start condition is meant that the catalyst has not yet reached its light off temperature. The judgement can be based on the temperature of the engine coolant provided by a temperature sensor, the temperature of a catalyst provided by a temperature sensor arranged in connection with the catalyst, the time the engine has operated since it was started, and/or the time since the engine was last operating before the engine was shut off. The judgement can be based on any of these principles or by a combination of the principles mentioned. In particular the ignition timing is changed by a spark advance value, which switches the ignition timing from an optimum combustion timing set for maximal output engine torque, when the engine is idling or when the engine operates under cold start conditions.

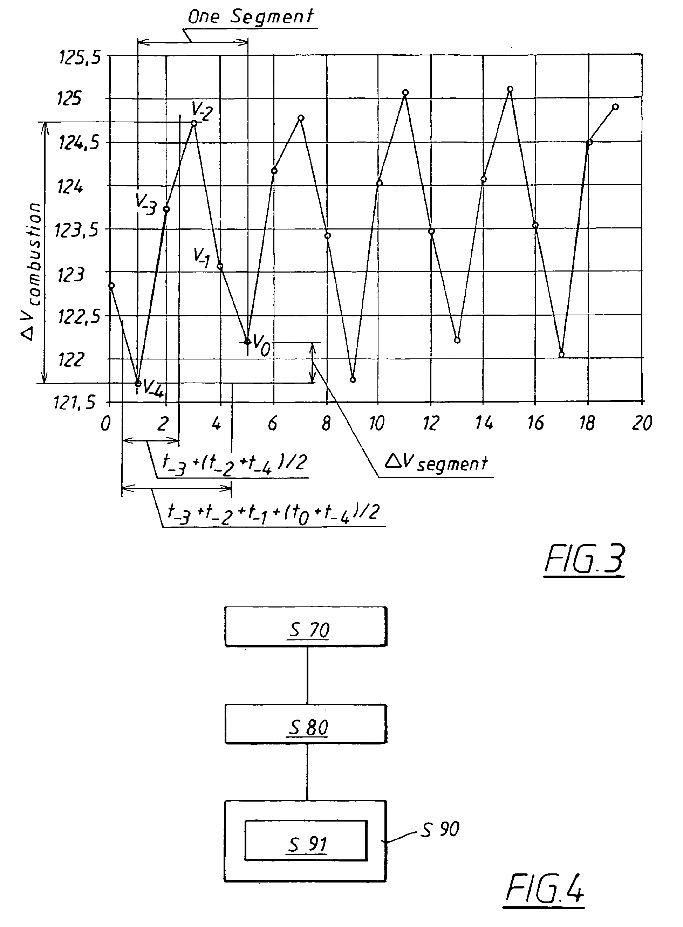

Furthermore the engine control unit 19 comprises means 27 for determining a delivered engine torque based on measurements performed by a sensor. The sensor may be a rotational velocity sensor 18, which senses the rotational speed of the crankshaft. The acceleration of the crankshaft can be determined according to a principle which is explained in connection with figures 3 and 4. Alternatively a sensor which directly measures the torque delivered by the engine may be used.

The engine control unit also includes means 28 for determining an actual spark advance value based on a delivered engine torque determined by the means 27 for determining a delivered engine torque. The actual spark advance is calculated using a second mapping M2 describing the relation between actual engine torque and spark advance.

Preferably the relation between actual engine torque and spark advance is based on the equation

$$\eta_\alpha(\Delta\alpha) = \frac{T_I}{T_{opt}(n_E, M_C)\eta_\lambda(\lambda)}$$ , where $\eta_\alpha$ is the efficiency depending on deviation from optimum ignition angle,

$T_{opt}$ is indicated torque for stoichimetric combustion and optimum ignition angle, $n_E$ is the crankshaft rotational speed, $M_c$ is indicated air mass per combustion, $\eta_\lambda$ is the efficiency depending on deviation from a stoichiometric air/fuel ratio $\lambda$. The second mapping M2 would thereby correspond to the inverse function of relation

$$\eta_\alpha(\Delta\alpha) = \frac{T_I}{T_{opt}(n_E, M_C)\eta_\lambda(\lambda)}$$ .

The control unit furthermore comprises means 29 for comparing the actual spark advance value with the requested spark advance value and means 30 for generating a fault signal if difference between the actual spark advance value and the requested spark advance value is larger than a threshold value.

The means 26 - 30 can be implemented by running subroutines in the engine control unit in a conventional manner.

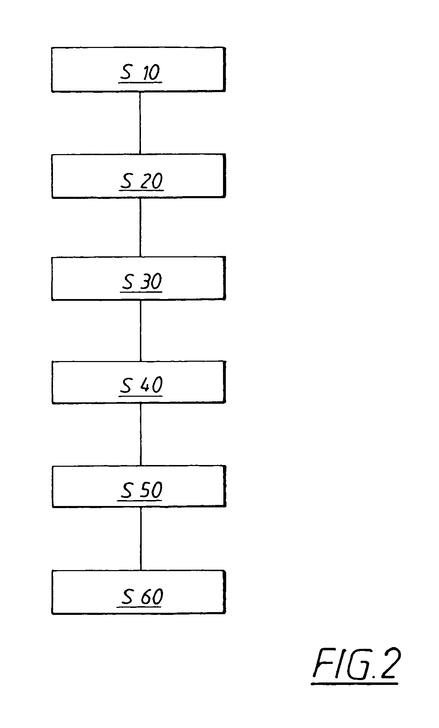

In figure 2 a schematic flow chart of a method for estimation of spark timing in an internal combustion engine is shown. In a first method step S10 a desired engine torque is determined. The desired engine torque is determined in a conventional manner using an input signal from an accelerator pedal as an input signal.

In a second method step S20 a requested spark advance value is determined based on the desired engine torque using a first mapping M1 describing the relation between desired engine torque $T_D$ and spark advance $\Delta\alpha$. Mapping between spark advance vale and desired engine torque are well known to persons skilled in the art and may be determined by standard experiments on the engine. The requested spark advance value is determined in a conventional manner and is primarily used at idle for maintaining a constant engine speed or in cold start conditions for increasing the heat transfer to a catalyst arranged in the exhaust duct.

In a third method step S30 a delivered engine torque is determined based on measurements performed by a sensor. Preferably a crank shaft rotational velocity sensor is used from which the crank shaft acceleration is determined. The torque can be calculated in a conventional manner from the crank shaft acceleration.

In a fourth method step S40 an actual spark advance value is determined based on the measured delivered engine torque using a second mapping describing the relation between actual engine torque and spark advance.

Preferably the relation between actual engine torque and spark advance is based on the equation

$$\eta_\alpha(\Delta\alpha) = \frac{T_I}{T_{opt}(n_E,M_C)\eta_\lambda(\lambda)}$$ , where $\eta_\alpha$ is the efficiency depending on deviation from optimum ignition angle,

$T_{opt}$ is indicated torque for stoichimetric combustion and optimum ignition angle, $n_E$ is the crankshaft rotational speed, $M_C$ is indicated air mass per combustion, $\eta_\lambda$ is the efficiency depending on deviation from a stoichiometric air/fuel ratio $\lambda$. The second mapping would thereby correspond to the inverse function of relation

$$\eta_\alpha(\Delta\alpha) = \frac{T_I}{T_{opt}(n_E,M_C)\eta_\lambda(\lambda)}$$ .

In a fifth method step S 50 the actual spark advance value is compared with the requested spark advance value, and a fault signal is generated in a sixth method step S60, if the difference between the actual spark advance value and the requested spark advance value is larger than a threshold value.

In figure 3 a diagram of the engine speed as a function of crank angle is shown. The manner of calculating the delivered engine torque based on measurements of crankshaft velocity will be decribed below.

The concept is to calculate indicated torque by measuring the flywheel acceleration during the combustion phases. In our five cylinder application we measure this acceleration from 36°CA to 108°CA (partly due to the 36°CA resolution in our system). This acceleration ($\dot{\omega}_{combustion}$) is a measure of the torque. However, some problems arise due to resonance phenomenon.

The effect from average engine speed change is compensated for. This is done by measuring the acceleration during a whole segment, called $\dot{\omega}_{segment}$ (144°CA in a five cylinder engine).

For the calculation of the indicated torque it is referred to figure 3. Here T = I*($\dot{\omega}_{combustion}$- $\dot{\omega}_{segment}$); I = Inertia ; T = indicated torque at one combustion.

In figure 3 $t_n$ denotes the time it takes the flywheel to rotate 36°CA. The average speed $v$ is then

$$v_n = \frac{2\cdot\pi}{20\ t_n}\ [\text{rad/s}]$$

The average acceleration between the samples n-4 to n-2, i.e. $\dot{\omega}_{combustion}$ is calculated like this (in the simulation this is calculated in the acc calc block):

$$\dot{\omega}_{combustion} = \frac{v_{n-2} - v_{n-4}}{t_{n-3} + (t_{n-2} + t_{n-4})/2} \Rightarrow$$

$$\dot{\omega}_{combustion} = \frac{\dfrac{2\ \pi}{20}\left(\dfrac{1}{t_{n-2}} - \dfrac{1}{t_{n-4}}\right)}{t_{n-3} + (t_{n-2} + t_{n-4})/2} \Rightarrow \qquad [\text{rad/s}^2]$$

$$\dot{\omega}_{combustion} = \frac{\pi}{10}\ \frac{t_{n-4} - t_{n-2}}{t_{n-2}t_{n-4}\left(t_{n-3} + (t_{n-2} + t_{n-4})/2\right)}$$

$\dot{\omega}segment$ is calculated like this (in the simulation this calculation is done in a dyn comp block):

$$\dot{\omega}_{segment} = \frac{v_n - v_{n-4}}{(t_n + t_{n-4})/2 + t_{n-1} + t_{n-2} + t_{n-3}} \Rightarrow$$

$$\dot{\omega}_{segment} = \frac{\dfrac{2\pi}{20}\left(\dfrac{1}{t_n} - \dfrac{1}{t_{n-4}}\right)}{(t_n + t_{n-4})/2 + t_{n-1} + t_{n-2} + t_{n-3}} \Rightarrow \qquad [rad/s^2]$$

$$\dot{\omega}_{segment} = \frac{\pi}{10}\frac{t_{n-4} - t_n}{t_n t_{n-4}\left((t_n + t_{n-4})/2 + t_{n-1} + t_{n-2} + t_{n-3}\right)}$$

We now need to calculate the torque.

$\dot{\omega}_{average}$ = the average over 2 engine revolutions of $(\dot{\omega}_{combustion} - \dot{\omega}_{segment})$.

This average is calculated to get a better calculated torque value during fuel cut off and a less noisy signal.

$T_{indicated}(\dot{\omega}_{average}, Ne)$ is a map that needs to be calibrated. It contains the Inertia of the engine and possible resonance in the engine. It is a function of the differential $(\dot{\omega}_{average})$ of the engine rotational speed and the engine speed (Ne). Using an estimate of a differential of the engine rotational speed a calibrated map will provide information about engine torque. The map may be calibrated through standard engine test procedures well known to a person skilled in the art.

In figure 4 schematic flowchart of a method for determining the delivered engine torque according to a preferred embodiment of the invention I shown.

In a first method step S70 a maximum value and a minimum value of a crankshaft rotational speed within a segment of C/N degrees crank angle is determined. Here C is the extension of an engine cycle measured in degrees crank angle and N is the number of cylinders. For a 4 stroke combustion engine C = 720°, for a 6 stroke combustion engine C = 1080°, etc. In a second method step S80, the crankshaft acceleration is determined according to equation 1. In a third method step S90 the delivered engine torque is determined from an estimation of crankshaft rotational acceleration based on a signal from a crankshaft rotational speed sensor. Preferably, in a fourth method S91 step contained in the third method step S90, the estimation of crankshaft acceleration is compensated for the average engine speed acceleration. The compensation is performed by subtracting an average crankshaft acceleration of a segment of C/N degrees crank angle. Here C is the extension of an engine cycle measured in degrees crank angle and N is the number of cylinders. The average crankshaft acceleration is calculated as the difference between a value of a crankshaft rotational speed at an end point of said segment and a value of a crankshaft rotational speed at a starting point of said segment divided by the duration in time it takes the crank shaft to rotate the amount of crank angle degrees which is equivalent to the size of said segment.

## Claims

1. Method for estimation of spark timing in an internal combustion engine of Otto type, which method includes the following method steps:

   - determining (S10)a desired engine torque ($T_D$),
   - determining (S20) a requested spark advance value ($\Delta\alpha_{req}$) based on said desired engine torque ($T_D$) using a first mapping (M1) describing the relation between desired engine torque ($T_D$) and requested spark advance value ($\Delta\alpha_{req}$),

   **characterised in that** the following further method steps are performed:

   - determining (S30) a delivered engine torque ($T_I$) based on measurements performed by a sensor (18),
   - determining (S40) an actual spark advance value ($\Delta\alpha_{act}$) based on said delivered engine torque ($T_I$) using a second mapping (M2) describing the relation between delivered engine torque ($T_I$) and actual spark advance value ($\Delta\alpha_{act}$).
   - comparing (S50) the actual spark advance value ($\Delta\alpha_{act}$)with the requested spark advance value ($\Delta\alpha_{req}$), and
   - generating a fault signal (S60) if the difference between the actual spark advance value ($\Delta\alpha_{act}$) and the requested spark advance value ($\Delta\alpha_{req}$) is larger than a threshold value.

2. Method according to claim 1, **characterised in that** the delivered engine torque ($T_I$) is determined from an estimation of crankshaft rotational acceleration ($\dot{\omega}$), based on a signal from a crankshaft rotational speed sensor (18).

3. Method according to claim 2, **characterised in that** the estimation of crankshaft rotational acceleration ($\dot{\omega}$) is based on the difference between a maximum value and a minimum value of a crankshaft rotational speed within a segment of C/N degrees crank angle, where C is the extension of an engine cycle measured in degrees crank angle and N is the number of cylinders in the engine.

4. Method according to claim 3, **characterised in that** the estimation of crankshaft rotational acceleration ($\dot{\omega}$) is compensated for the average engine speed acceleration ($\dot{\omega}_{segment}$) by subtracting a crankshaft acceleration based on the difference between a value of a crankshaft rotational speed an end point and a starting point of a segment of C/N degrees crank angle.

5. Method according to claim 1, **characterised in that** the delivered engine torque is determined from measurements performed by a torque sensor arranged to measure the delivered torque.

6. Method according to any of claims 1- 5, **characterised in that** the relation between actual engine torque and spark advance is based on the relation $\eta_\alpha(\Delta\alpha) = \dfrac{T_I}{T_{opt}(n_E, M_C)\eta_\lambda(\lambda)}$, where $\eta_\alpha$ is the efficiency depending on deviation from optimum ignition angle, $T_{opt}$ is indicated torque for stoichimetric combustion and optimum ignition angle, $n_E$ is the crankshaft rotational speed, $M_C$ is indicated air mass per combustion, $\eta_\lambda$ is the efficiency depending on deviation from a stoichiometric air/fuel ratio $\lambda$.

7. Method according to claim 6, **characterised in that** the second mapping corresponds to the inverse function of relation $\eta_\alpha(\Delta\alpha) = \dfrac{T_I}{T_{opt}(n_E, M_C)\eta_\lambda(\lambda)}$ .

8. An internal combustion engine of Otto type comprising an arrangement for estimation of spark timing including

   - means (19, 22) for determining a desired engine torque (To),
   - means (26) for determining a requested spark advance value ($\Delta\alpha_{req}$) based on said desired engine torque ($T_D$) using a first mapping (M1) describing the relation between desired engine torque ($T_D$) and requested spark advance value ($\Delta\alpha_{req}$),

   **characterised in that** the arrangement further comprises:

   - means (27) for determining a delivered engine torque ($T_1$) based on measurements performed by a sensor (18),
   - means (28) for determining an actual spark advance value ($\Delta\alpha_{act}$) based on said delivered engine torque ($T_I$) using a second mapping (M2) describing the relation between actual engine torque and spark advance,
   - means (29) for comparing the actual spark advance value ($\Delta\alpha$ act) with the requested spark advance value ($\Delta\alpha_{req}$), and
   - means (30) for generating a fault signal if difference between the actual spark advance value ($\Delta\alpha_{act}$) and the requested spark advance value ($\Delta\alpha_{req}$) is larger than a threshold value.

9. Combustion engine according to claim 8, **characterised in that** said means (27) for determining a delivered engine torque are arranged to determine the delivered engine torque ($T_1$) from an estimation of crankshaft rotational acceleration ($\dot{\omega}$) based on a signal from a crankshaft rotational speed sensor (18).

10. Combustion engine according to claim 9, **characterised in that** said means (27) for determining a delivered engine torque ($T_1$) are arranged to estimate crankshaft acceleration ($\dot{\omega}$) based on the difference between a maximum value and a minimum value of a crankshaft rotational speed within a segment of C/N degrees crank angle, where C is the extension of an engine cycle measured in degrees crank angle and N is the number of cylinders.

11. Combustion engine according to claim 10, **characterised in that** said means (27) for determining a delivered engine torque are arranged to compensate the estimation of crankshaft acceleration for the average engine speed accel-

eration ($\dot{\omega}$ segment) by subtracting a crankshaft acceleration based on the difference between a value of a crankshaft rotational speed an end point and a starting point of a segment of C/N degrees crank angle.

12. Combustion engine according to claim 8, **characterised in that** said means (27) for determining a delivered engine torque are arranged to determine the delivered engine torque from measurements performed by a torque sensor arranged to measure the delivered torque.

13. Combustion engine according to any of claims 8 - 12, **characterised in that** said means (27) for determining a delivered engine torque are arranged to base the relation between actual engine torque and spark advance on the relation $\eta_\alpha(\Delta\alpha) = \dfrac{T_I}{T_{opt}(n_E, M_C)\eta_\lambda(\lambda)}$ , where $\eta_\alpha$

is the efficiency depending on deviation from optimum ignition angle, $T_{opt}$ is indicated torque for stoichimetric combustion and optimum ignition angle, $n_E$ is the crankshaft rotational speed, $M_C$ is indicated air mass per combustion, $\eta_\lambda$ is the efficiency depending on deviation from a stoichiometric air/fuel ratio $\lambda$.

14. Combustion engine according to claim 13, **characterised in that** the second mapping corresponds to the inverse

function of relation $\eta_\alpha(\Delta\alpha) = \dfrac{T_I}{T_{opt}(n_E, M_C)\eta_\lambda(\lambda)}$ .

**Patentansprüche**

1. Verfahren zur Berechnung der Zündzeit in einem Ottomotor, wobei das Verfahren die folgenden Verfahrensschritte aufweist:

   - Bestimmen (S10) eines erwünschten Motordrehmoments ($T_D$),
   - Bestimmen (S20) eines erforderten Frühzündungswertes ($\Delta\alpha_{req}$) basierend auf dem erwünschten Motordrehmoment ($T_D$) unter Verwendung eines ersten Kennfelds (M1), welches das Verhältnis zwischen dem erwünschten Motordrehmoment ($T_D$) und dem erforderten Frühzündungswert ($\Delta\alpha_{req}$) beschreibt,

   **dadurch gekennzeichnet, dass** die folgenden weiteren Verfahrensschritte durchgeführt werden:

   - Bestimmen (S30) eines gelieferten Motordrehmoments ($T_I$) basierend auf den durch einen Sensor (18) durchgeführten Messungen,
   - Bestimmen (S40) eines Ist-Wertes ($\Delta\alpha_{act}$) der Frühzündung basierend auf dem gelieferten Motordrehmoment ($T_I$) unter Verwendung eines zweiten Kennfelds (M2), welches das Verhältnis zwischen dem gelieferten Motordrehmoment ($T_I$) und dem Ist-Wert ($\Delta\alpha_{act}$) der Frühzündung beschreibt,
   - Vergleichen (S50) des Ist-Wertes ($\Delta\alpha_{act}$) der Frühzündung mit dem erforderten Wert ($\Delta\alpha_{req}$) der Frühzündung, und
   - Erzeugen eines Fehlersignals (S60), wenn der Unterschied zwischen dem Ist-Wert ($\Delta\alpha_{act}$) der Frühzündung und dem erforderten Wert ($\Delta\alpha_{req}$) der Frühzündung größer als ein Schwellenwert ist.

2. Verfahren nach Anspruch 1, **dadurch gekennzeichnet, dass** das gelieferte Motordrehmoment ($T_I$) aus einer Abschätzung einer Rotationsbeschleunigung ($\dot{\omega}$) der Kurbelwelle basierend auf einem Signal von einem Kurbelwellendrehzahlsensor (18) bestimmt wird.

3. Verfahren nach Anspruch 2, **dadurch gekennzeichnet, dass** die Abschätzung der Rotationsbeschleunigung ($\dot{\omega}$) der Kurbelwelle auf dem Unterschied zwischen einem Höchstwert und einem Mindestwert einer Kurbelwellendrehzahl innerhalb eines Segments des C/N-Grad Kurbelwinkels basiert, wobei C die Verlängerung eines Motorzykluses ist, welcher in Grad Kurbelwinkel gemessen wird, und N die Anzahl der Zylinder im Motor ist.

4. Verfahren nach Anspruch 3, **dadurch gekennzeichnet, dass** die Berechnung der Rotationsbeschleunigung ($\dot{\omega}$) der Kurbelwelle für die durchschnittliche Motordrehzahlbeschleunigung ($\dot{\omega}_{segment}$) durch das Subtrahieren einer Kurbelwellenbeschleunigung basierend auf dem Unterschied zwischen einem Wert einer Kurbelwellendrehzahl an einem Endpunkt und einem Anfangspunkt eines Segmentes von C/N-Grad Kurbelwinkel kompensiert wird.

5. Verfahren nach Anspruch 1, **dadurch gekennzeichnet, dass** das gelieferte Motordrehmoment aus den Messungen bestimmt wird, welche durch einen Drehmomentsensor durchgeführt werden, welcher zum Messen des gelieferten Drehmoments vorgesehen ist.

6. Verfahren nach einem der Ansprüche 1-5, **dadurch gekennzeichnet, dass** das Verhältnis zwischen dem Ist-Motordrehmoment und der Frühzündung auf dem Verhältnis $\eta_\alpha(\Delta\alpha) = \dfrac{T_I}{T_{opt}(n_E, M_C)\eta_\lambda(\lambda)}$ basiert, wobei $\eta_\alpha$ der Wirkungsgrad ist, welcher von der Abweichung vom optimalen Zündwinkel abhängt, $T_{opt}$ das angezeigte Drehmoment für die stöchiometrische Verbrennung und den optimalen Zündwinkel, $n_E$ die Kurbelwellendrehzahl, $M_C$ die angezeigte Luftmasse pro Verbrennung und $\eta_\lambda$ der Wirkungsgrad ist, welcher von der Abweichung von einem stöchiometrischen Luft/Kraftstoff-Verhältnis $\lambda$ abhängt.

7. Verfahren nach Anspruch 6, **dadurch gekennzeichnet, dass** das zweite Kennfeld der umgekehrten Funktion des Verhältnisses $\eta_\alpha(\Delta\alpha) = \dfrac{T_I}{T_{opt}(n_E, M_C)\eta_\lambda(\lambda)}$ entspricht.

8. Als Ottomotor ausgebildeter Verbrennungsmotor, welcher eine Anordnung zur Berechnung des Zündzeitpunktes aufweist, welche Folgendes enthält:

   - Einrichtung (19, 22) zum Bestimmen eines erwünschten Motordrehmoments ($T_D$),
   - Einrichtung (26) zum Bestimmen eines erforderten Frühzündungswertes ($\Delta\alpha_{req}$) basierend auf dem erwünschten Motordrehmoment ($T_D$) unter Verwendung eines ersten Kennfelds (M1), welches das Verhältnis zwischen dem erwünschten Motordrehmoment ($T_D$) und dem erforderten Frühzündungswert ($\Delta\alpha_{req}$) beschreibt,

   **dadurch gekennzeichnet, dass** die Anordnung zudem Folgendes aufweist:

   - Einrichtung (27) zum Bestimmen eines gelieferten Motordrehmoments ($T_I$) basierend auf den durch einen Sensor (18) durchgeführten Messungen,
   - Einrichtung (28) zum Bestimmen eines Ist-Wertes ($\Delta\alpha_{act}$) der Frühzündung basierend auf dem gelieferten Motordrehmoment ($T_I$) unter Verwendung eines zweiten Kennfelds (M2), welches das Verhältnis zwischen dem Ist-Motordrehmoment und der Frühzündung beschreibt,
   - Einrichtung (29) zum Vergleichen des Ist-Wertes ($\Delta\alpha_{act}$) der Frühzündung mit dem erforderten Wert ($\Delta\alpha_{req}$) der Frühzündung, und
   - Einrichtung (30) zum Erzeugen eines Fehlersignals, wenn der Unterschied zwischen dem Ist-Wert ($\Delta\alpha_{act}$) der Frühzündung und dem erforderten Wert ($\Delta\alpha_{req}$) der Frühzündung grö-ßer als ein Schwellenwert ist.

9. Verbrennungsmotor nach Anspruch 8, **dadurch gekennzeichnet, dass** die Einrichtung (27) zum Bestimmen eines gelieferten Motordrehmoments vorgesehen ist, um das gelieferte Motordrehmoment ($T_I$) aus einer Berechnung einer Rotationsbeschleunigung ($\dot\omega$) der Kurbelwelle basierend auf einem Signal von einem Kurbelwellendrehzahlsensor (18) zu bestimmen.

10. Verbrennungsmotor nach Anspruch 9, **dadurch gekennzeichnet, dass** die Einrichtung (27) zum Bestimmen eines gelieferten Motordrehmoments ($T_I$) vorgesehen ist, um die Kurbelwellenbeschleunigung ($\dot\omega$) basierend auf dem Unterschied zwischen einem Höchstwert und einem Mindestwert einer Kurbelwellendrehzahl innerhalb eines Segments von C/N-Grad Kurbelwinkel zu berechnen, wobei C die Verlängerung des Motorzykluses, welcher in Grad Kurbelwinkel gemessen wird, und N die Anzahl von Zylindern ist.

11. Verbrennungsmotor nach Anspruch 10, **dadurch gekennzeichnet, dass** die Einrichtung (27) zum Bestimmen eines gelieferten Motordrehmoments vorgesehen ist, um die Berechnung der Kurbelwellenbeschleunigung für die durchschnittliche Motordrehzahlbeschleunigung ($\dot\omega_{segment}$) durch das Subtrahieren einer Kurbelwellenbeschleunigung basierend auf dem Unterschied zwischen einem Wert einer Kurbelwellendrehzahl an einem Endpunkt und einem Anfangspunkt eines Segmentes von C/N-Grad Kurbelwinkel zu kompensieren.

**12.** Verbrennungsmotor nach Anspruch 8, **dadurch gekennzeichnet, dass** die Einrichtung (27) zum Bestimmen eines gelieferten Motordrehmoments vorgesehen ist, um das gelieferte Motordrehmoment aus Messungen zu bestimmen, welche durch einen Drehmomentsensor durchgeführt werden, welcher zum Messen des gelieferten Drehmoments vorgesehen ist.

**13.** Verbrennungsmotor nach einem der Ansprüche 8-12, **dadurch gekennzeichnet, dass** die Einrichtung (27) zum Bestimmen eines gelieferten Motordrehmoments vorgesehen ist, um das Verhältnis zwischen dem Ist-Motordrehmoment und der Frühzündung auf dem Verhältnis $\eta_\alpha(\Delta\alpha) = \dfrac{T_I}{T_{opt}(n_E, M_C)\eta_\lambda(\lambda)}$ zu basieren, wobei $\eta_\alpha$ der Wirkungsgrad ist, welcher von der Abweichung vom optimalen Zündwinkel abhängt, $T_{opt}$ das angezeigte Drehmo-ment für die stöchiometrische Verbrennung und den optimalen Zündwinkel, $n_E$ die Kurbelwellendrehzahl, $M_C$ die angezeigte Luftmasse pro Verbrennung und $\eta_\lambda$ der Wirkungsgrad ist, welcher von der Abweichung von einem stöchiometrischen Luft/Kraftstoff-Verhältnis $\lambda$ abhängt.

**14.** Verbrennungsmotor nach Anspruch 13, **dadurch gekennzeichnet, dass** das zweite Kennfeld der umgekehrten Funktion des Verhältnisses $\eta_\alpha(\Delta\alpha) = \dfrac{T_I}{T_{opt}(n_E, M_C)\eta_\lambda(\lambda)}$ entspricht.

**Revendications**

**1.** Procédé d'estimation d'un calage d'allumage dans un moteur à combustion interne de type à 4 temps, lequel procédé inclut les étapes de procédé suivantes consistant à :

- déterminer (S10) un couple moteur voulu ($T_D$),
- déterminer (S20) une valeur requise d'avance à l'allumage ($\Delta\alpha_{req}$) basée sur ledit couple moteur voulu ($T_D$) en utilisant une première cartographie (M1) décrivant la relation entre le couple moteur voulu ($T_D$) et la valeur requise d'avance à l'allumage ($\Delta\alpha_{req}$),

**caractérisé en ce que** sont exécutées les étapes de procédé supplémentaires suivantes consistant à :

- déterminer (S30) un couple moteur fourni ($T_I$) basé sur des mesures réalisées par un capteur (18),
- déterminer (S40) une valeur réelle d'avance à l'allumage ($\Delta\alpha_{act}$) basée sur ledit couple moteur fourni ($T_I$) en utilisant une seconde cartographie (M2) décrivant la relation entre le couple moteur fourni ($T_I$) et la valeur réelle d'avance à l'allumage ($\Delta\alpha_{act}$),
- comparer (S50) la valeur réelle d'avance à l'allumage ($\Delta\alpha_{act}$) avec la valeur requise d'avance à l'allumage ($\Delta\alpha_{req}$), et
- générer un signal de défaut (S60) si la différence entre la valeur réelle d'avance à l'allumage ($\Delta\alpha_{act}$) et la valeur requise d'avance à l'allumage ($\Delta\alpha_{req}$) est supérieure à une valeur de seuil.

**2.** Procédé selon la revendication 1, **caractérisé en ce que** le couple moteur fourni ($T_I$) est déterminé à partir d'une estimation d'une accélération de rotation de vilebrequin $(\dot{\omega})$, basée sur un signal provenant d'un capteur de vitesse de rotation de vilebrequin (18).

**3.** Procédé selon la revendication 2, **caractérisé en ce que** l'estimation d'une accélération de rotation de vilebrequin $(\dot{\omega})$ est basée sur la différence entre une valeur maximale et une valeur minimale d'une vitesse de rotation de vilebrequin dans un segment d'angle de vilebrequin à C/N degrés, où C est l'extension d'un cycle de moteur mesurée en degrés d'angle de vilebrequin et N est le nombre de cylindres dans le moteur.

**4.** Procédé selon la revendication 3, **caractérisé en ce que** l'estimation d'une accélération de rotation de vilebrequin

$(\overset{\bullet}{\omega})$ est compensée pour l'accélération moyenne de régime moteur $(\overset{\bullet}{\omega}_{segment})$ en soustrayant une accélération de vilebrequin basée sur la différence entre une valeur d'une vitesse de rotation de vilebrequin à un point de fin et à un point de début d'un segment d'angle de vilebrequin à C/N degrés.

**5.** Procédé selon la revendication 1, **caractérisé en ce que** le couple moteur fourni est déterminé à partir de mesures réalisées par un capteur de couple agencé pour mesurer le couple fourni.

**6.** Procédé selon l'une quelconque des revendications 1 à 5, **caractérisé en ce que** la relation entre le couple moteur réel et l'avance à l'allumage est basée sur la relation $\eta_\alpha(\Delta\alpha) = \dfrac{T_I}{T_{opt}(n_E, M_C)\eta_\lambda(\lambda)}$, où $\eta_\alpha$ est le rendement dépendant d'un écart par rapport à un angle d'allumage optimal, $T_{opt}$ est un couple indiqué pour une combustion stoechiométrique et un angle d'allumage optimal, $n_E$ est la vitesse de rotation de vilebrequin, $M_C$ est la masse d'air indiquée par combustion, et $\eta_\lambda$ est le rendement dépendant d'un écart par rapport à un rapport air/ carburant stoechiométrique $\lambda$.

**7.** Procédé selon la revendication 6, **caractérisé en ce que** la seconde cartographie correspond à la fonction inverse de la relation $\eta_\alpha(\Delta\alpha) = \dfrac{T_I}{T_{opt}(n_E, M_C)\eta_\lambda(\lambda)}$.

**8.** Moteur à combustion interne de type à 4 temps comportant un agencement pour une estimation d'un calage d'allumage incluant

- des moyens (19, 22) pour déterminer un couple moteur voulu ($T_D$),
- des moyens (26) pour déterminer une valeur requise d'avance à l'allumage ($\Delta\alpha_{req}$) basée sur ledit couple moteur voulu ($T_D$) en utilisant une première cartographie (M1) décrivant la relation entre le couple moteur voulu ($T_D$) et la valeur requise d'avance à l'allumage ($\Delta\alpha_{req}$),

**caractérisé en ce que** l'agencement comporte également :

- des moyens (27) pour déterminer un couple moteur fourni ($T_I$) basé sur des mesures réalisées par un capteur (18),
- des moyens (28) pour déterminer une valeur réelle d'avance à l'allumage ($\Delta\alpha_{act}$) basée sur ledit couple moteur fourni ($T_I$) en utilisant une seconde cartographie (M2) décrivant la relation entre le couple moteur réel et l'avance à l'allumage,
- des moyens (29) pour comparer la valeur réelle d'avance à l'allumage ($\Delta\alpha_{act}$) avec la valeur requise d'avance à l'allumage ($\Delta\alpha_{req}$), et
- des moyens (30) pour générer un signal de défaut si une différence entre la valeur réelle d'avance à l'allumage ($\Delta\alpha_{act}$) et la valeur requise d'avance à l'allumage ($\Delta\alpha_{req}$) est supérieure à une valeur de seuil.

**9.** Moteur à combustion selon la revendication 8, **caractérisé en ce que** lesdits moyens (27) pour déterminer un couple moteur fourni sont agencés pour déterminer le couple moteur fourni ($T_I$) à partir d'une estimation d'une accélération de rotation de vilebrequin $(\overset{\bullet}{\omega})$ basée sur un signal provenant d'un capteur de vitesse de rotation de vilebrequin (18).

**10.** Moteur à combustion selon la revendication 9, **caractérisé en ce que** lesdits moyens (27) pour déterminer un couple moteur fourni ($T_I$) sont agencés pour estimer une accélération de vilebrequin $(\overset{\bullet}{\omega})$ basée sur la différence entre une valeur maximale et une valeur minimale d'une vitesse de rotation de vilebrequin dans un segment d'angle de vilebrequin à C/N degrés, où C est l'extension d'un cycle de moteur mesurée en degrés d'angle de vilebrequin et N est le nombre de cylindres.

**11.** Moteur à combustion selon la revendication 10, **caractérisé en ce que** lesdits moyens (27) pour déterminer un couple moteur fourni sont agencés pour compenser l'estimation d'une accélération de vilebrequin pour l'accélération moyenne de régime moteur $(\overset{\bullet}{\omega}_{\text{segment}})$ en soustrayant une accélération de vilebrequin basée sur la différence entre une valeur de vitesse de rotation de vilebrequin à un point de fin et à un point de début d'un segment d'angle de vilebrequin à C/N degrés.

**12.** Moteur à combustion selon la revendication 8, **caractérisé en ce que** lesdits moyens (27) pour déterminer un couple moteur fourni sont agencés pour déterminer le couple moteur fourni à partir de mesures réalisées par un capteur de couple agencé pour mesurer le couple fourni.

**13.** Moteur à combustion selon l'une quelconque des revendications 8 à 12, **caractérisé en ce que** lesdits moyens (27) pour déterminer un couple moteur fourni sont agencés pour baser la relation entre le couple moteur réel et l'avance à l'allumage sur la relation $\eta_\alpha(\Delta\alpha) = \dfrac{T_I}{T_{opt}(n_E, M_C)\eta_\lambda(\lambda)}$, où $\eta_\alpha$ est le rendement dépendant d'un écart par rapport à un angle d'allumage optimal, $T_{opt}$ est un couple indiqué pour une combustion stoechiométrique et un angle d'allumage optimal, $n_E$ est la vitesse de rotation de vilebrequin, $M_C$ est la masse d'air indiquée par combustion, $\eta_\lambda$ est le rendement dépendant d'un écart par rapport à un rapport air/carburant stoechiométrique $\lambda$.

**14.** Moteur à combustion selon la revendication 13, **caractérisé en ce que** la seconde cartographie correspond à la fonction inverse de la relation $\eta_\alpha(\Delta\alpha) = \dfrac{T_I}{T_{opt}(n_E, M_C)\eta_\lambda(\lambda)}$.

_FIG. 1_

FIG.2

One Segment

$\Delta V_{combustion}$

125,5

125

124,5

124

123,5

123

122,5

122

121,5

$V_{-2}$

$V_{-3}$

$V_{-1}$

$V_0$

$V_{-4}$

0  2  4  6  8  10  12  14  16  18  20

$t_{-3} + (t_{-2} + t_{-4})/2$

$\Delta V_{segment}$

$t_{-3} + t_{-2} + t_{-1} + (t_0 + t_{-4})/2$

*FIG.3*

S 70

S 80

S 91 — S 90

*FIG.4*